# EUROPEAN PATENT SPECIFICATION

(11) **EP 4 424 480 B1**
(45) Date of publication and mention of the grant of the patent: **04.11.2026**
(21) Application number: 24155631.5
(22) Date of filing: 02.02.2024
(51) Int. Cl.: B26D 5/00, B26D 7/30, B26D 5/32, B26D 5/34

(54) **CUTTING POSITION DESIGNATION DEVICE, CUTTING POSITION DESIGNATION METHOD, CUTTING SYSTEM, AND X-RAY INSPECTION DEVICE**
VORRICHTUNG ZUR BESTIMMUNG DER SCHNEIDPOSITION, VERFAHREN ZUR BESTIMMUNG DER SCHNEIDPOSITION, SCHNEIDSYSTEM UND RÖNTGENINSPEKTIONSGERÄT
DISPOSITIF DE DÉSIGNATION DE LA POSITION DE COUPE, MÉTHODE DE DÉSIGNATION DE LA POSITION DE COUPE, SYSTÈME DE COUPE ET DISPOSITIF D'INSPECTION PAR RAYONS X

(30) Priority: 07.02.2023 JP 2023017043
(43) Date of publication of application: 04.09.2024
(73) Proprietor: Ishida Co., Ltd., Kyoto-shi Kyoto 606-8392 (JP)
(72) Inventor: SUGIMOTO, Kazuyuki, Ritto-shi, Shiga, 520-3026 (JP); KONDO, Shingo, Ritto-shi, Shiga, 520-3026 (JP); MASAOKA, Yunosuke, Ritto-shi, Shiga, 520-3026 (JP); KUDO, Daisuke, Ritto-shi, Shiga, 520-3026 (JP)
(74) Representative: Global IP Europe Patentanwaltskanzlei

(56) References cited:
- JP-A- 2016 017 855
- JP-B2- 6 525 512
- US-A1- 2012 073 415
- US-A1- 2012 198 974

## Description

### Technical Field

An aspect of the present invention relates to a cutting position designation device, a cutting position designation method, a cutting system, and an X-ray inspection device.

### Background Art

As a technique related to a cutting position designation device, there is known a technique of irradiating an article with X-rays, the article being conveyed by a conveyor, acquiring a weight of the article from an obtained X-ray image, and using the acquired weight to designate a cutting position at which a segment having a target weight is obtained (e.g., refer to Patent Document 1).

### Citation List

### Patent Literature

Patent Document 1: JP 6525512 B

### Summary of Invention

### Technical Problem

In the technique described above, final products may be obtained by dividing the article into a plurality of segments and then further dividing each segment. In this case, when the article does not have a uniform thickness and the article is cut at the designated cutting positions, the segments may be long and narrow at a thick portion of the article, and thus it may not be possible to obtain a product having a favorable shape.

US 2012/073415 A1 discloses a cutting position designation device comprising:
an irradiation unit configured to irradiate an article with electromagnetic waves, the article being conveyed by a conveyor;
a detection unit configured to detect the electromagnetic waves emitted by the irradiation unit and transmitted through or reflected by the article; and
a designation unit configured to designate a plurality of cutting positions arranged in a predetermined direction with respect to the article on the basis of a detection result by the detection unit,
wherein the designation unit is further configured to designate a first cutting position so as to obtain a segment having a set amount corresponding to a primary target amount, the primary target amount being a target amount when the article is divided into a plurality of segments. The target amount in this document is the weight.

An object of an aspect of the present invention is to provide a cutting position designation device, a cutting position designation method, a cutting system, and an X-ray inspection device that can yield a product having a favorable shape.

### Solution to Problem

(1) A cutting position designation device according to a first aspect of the invention, as defined in claim 1, aspect of the present invention includes an irradiation unit configured to irradiate an article with electromagnetic waves, the article being conveyed by a conveyor, a detection unit configured to detect the electromagnetic waves emitted by the irradiation unit and transmitted through or reflected by the article, and a designation unit configured to designate a plurality of cutting positions arranged in a predetermined direction with respect to the article on the basis of a detection result by the detection unit. The designation unit designates a first cutting position so as to obtain a segment having a set amount corresponding to a primary target amount, the primary target amount being a target amount when the article is divided into segments, and in a case in which a width of the segment in the predetermined direction is less than a threshold value at the first cutting position, adds a secondary target amount to the set amount, the secondary target amount being a target amount when the segment is to be further divided, and designates a second cutting position so as to obtain the segment having the set amount including the secondary target amount.

In this cutting position designation device, when the width of the segment in the predetermined direction is less than the threshold value, the second cutting position is designated so as to obtain the segment having the set amount including the secondary target amount. Therefore, even in a case in which the article does not have a uniform thickness, for example, it is possible to designate a cutting position that helps prevent the segment from becoming long and narrow while considering further division of the segment to obtain the product. That is, it is possible to obtain a product having a favorable shape.

The cutting position designation device according to this first aspect of the invention may further include a weight measurement unit configured to acquire a weight of the article from an X-ray image based on the detection result by the detection unit, the irradiation unit may irradiate the article with X-rays, and the designation unit may use weight as the primary target amount, the secondary target amount, and the set amount. In this case, the cutting positions can be designated by using weight.

The cutting position designation device according to this first aspect of the invention may further include a volume measurement unit configured to acquire a volume of the article from an infrared image based on the detection result by the detection unit, the irradiation unit may irradiate the article with infrared light, and the designation unit may use volume as the primary target amount, the secondary target amount, and the set amount. In this case, the cutting positions can be designated by using volume.

(4) In the cutting position designation device according to this first aspect of the invention, in a case in which a small segment having a low set amount less than a lower limit threshold value is produced in the article as a result of designating the first cutting position or the second cutting position, the designation unit may add an amount obtained by dividing the low set amount by the plurality of segments to the set amount of each of the plurality of segments, and newly designate a third cutting position at which the article is divided into the plurality of segments having a plurality of the set amounts after the addition. This helps prevent a wasted portion (leftover end or the like) from being produced when the article is divided into the plurality of segments.

The cutting position designation device according this first aspect of the invention may further include a correction unit configured to correct the plurality of cutting positions on the basis of an estimated amount of the segment and an actual measurement amount of the segment. Accordingly, even if there is variation in, for example, a conveyance speed of the article and/or in an installation position of the cutting device that cuts the article, the cutting position can be corrected by the correction unit in accordance with the variation.

A cutting position designation method according to a further, second aspect of the present invention, as defined in claim 5, includes an irradiation step of irradiating an article with electromagnetic waves, the article being conveyed, a detection step of detecting the electromagnetic waves emitted in the irradiation step and transmitted through or reflected by the article, and a designation step of designating a plurality of cutting positions arranged in a predetermined direction with respect to the article on the basis of a detection result in the detection step. The designation step includes designating a first cutting position so as to obtain a segment having a set amount corresponding to a primary target amount, the primary target amount being a target amount when the article is divided into segments, and in a case in which a width of the segment in the predetermined direction is less than a threshold value at the first cutting position, adding a secondary target amount to the set amount, the secondary target amount being a target amount when the segment is to be further divided, and designating a second cutting position so as to obtain the segment having the set amount including the secondary target amount.

In this cutting position designation method, when the width of the segment in the predetermined direction is less than the threshold value, the second cutting position is designated so as to obtain the segment having the set amount including the secondary target amount. Therefore, even in a case in which the article does not have a uniform thickness, for example, it is possible to designate a cutting position that helps prevent the segment from becoming long and narrow while considering further division of the segment to obtain the product. That is, it is possible to obtain a product having a favorable shape.

A cutting system according to the first aspect of the present invention can further include a cutting device configured to cut the article at the plurality of cutting positions designated by the cutting position designation device. Due to including the cutting position designation device described above, this cutting system achieves effects such as making it possible to obtain a product having a favorable shape.

(8) An X-ray inspection device according to dependent claim 7 includes the cutting position designation device according to dependent claim 2 an inspection unit configured to conduct a quality inspection of the article on the basis of the X-ray image, and a sorting unit configured to remove the article in a case where the article is designated as being a defective product on the basis of a quality inspection result by the inspection unit. Due to including the cutting position designation device described above, this X-ray inspection device achieves effects such as making it possible to obtain a product having a favorable shape.

### Advantageous Effects of Invention

According to an aspect of the present invention, it is possible to provide a cutting position designation device, a cutting position designation method, a cutting system, and an X-ray inspection device that can yield a product having a favorable shape.

### Brief Description of Drawings

FIG. 1 is a configuration diagram illustrating a cutting system according to a first embodiment.
FIG. 2 is a configuration diagram illustrating an interior of a shield box in FIG. 1.
FIG. 3 is a block diagram illustrating a functional configuration of a control unit in FIG. 1.
FIG. 4 is a diagram illustrating a cutting position designation screen displayed on a display operation unit in FIG. 1.
FIG. 5(a) is a diagram for explaining designation of a cutting position. FIG. 5(b) is a diagram illustrating a continuation of FIG. 5(a).
FIG. 6(a) is a diagram illustrating a continuation of FIG. 5(b). FIG. 6(b) is a diagram illustrating a continuation of FIG. 6(a).
FIG. 7(a) is a diagram illustrating a continuation of FIG. 6(b). FIG. 7(b) is a diagram illustrating a continuation of FIG. 7(a).
FIG. 8 is a diagram illustrating a cutting position correction screen displayed on the display operation unit in FIG. 1.

### Description of Embodiments

Embodiments will be described below with reference to the drawings. Note that, in descriptions of the drawings, the same elements are denoted by the same reference signs, and redundant descriptions are omitted.

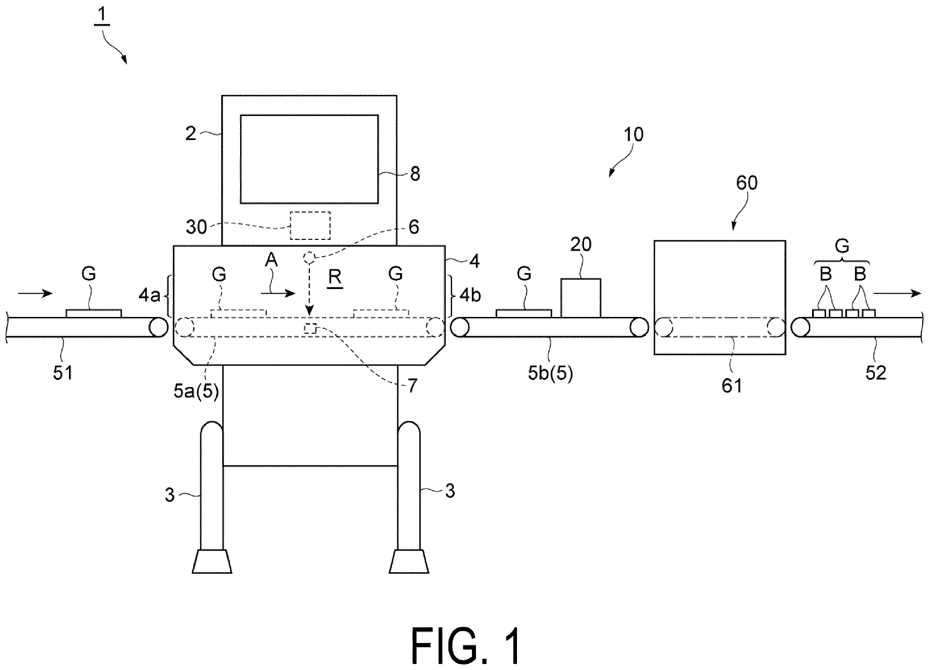

As illustrated in FIG. 1, a cutting system 1 includes an X-ray inspection device 10 that inspects an article G, and a cutting device 60 that cuts the article G after inspection by the X-ray inspection device 10. The article G is a product having a certain size. The article G is not particularly limited and is, for example, meat in the present embodiment.

The X-ray inspection device 10 includes a device body 2, support legs 3, a shield box 4, a conveyor 5, an X-ray irradiation unit (irradiation unit) 6, an X-ray detection unit (detection unit) 7, a display operation unit 8, a sorting unit 20, and a control unit 30. The X-ray inspection device 10 generates an X-ray image of the article G while sequentially conveying a plurality of the articles G, and inspects the article G on the basis of the X-ray image generated. The article G before inspection is transported into the X-ray inspection device 10 by a supply conveyor 51.

The device body 2 accommodates the control unit 30 and other components. The support legs 3 support the device body 2. The shield box 4 is provided at the device body 2. The shield box 4 prevents leakage of X-rays (electromagnetic waves) to the outside. In an interior of the shield box 4, an inspection region is provided where the article G is inspected by X-rays. A supply port 4a and a delivery port 4b are formed in the shield box 4.

The conveyor 5 conveys the article G. In the illustrated example, the conveyor 5 includes a first conveyor 5a that conveys the article G in a conveyance direction A from the supply port 4a to the delivery port 4b of the shield box 4 via the inspection region, and a second conveyor 5b that conveys the article G from the delivery port 4b to the cutting device 60. The conveyor 5 is, for example, a belt conveyor.

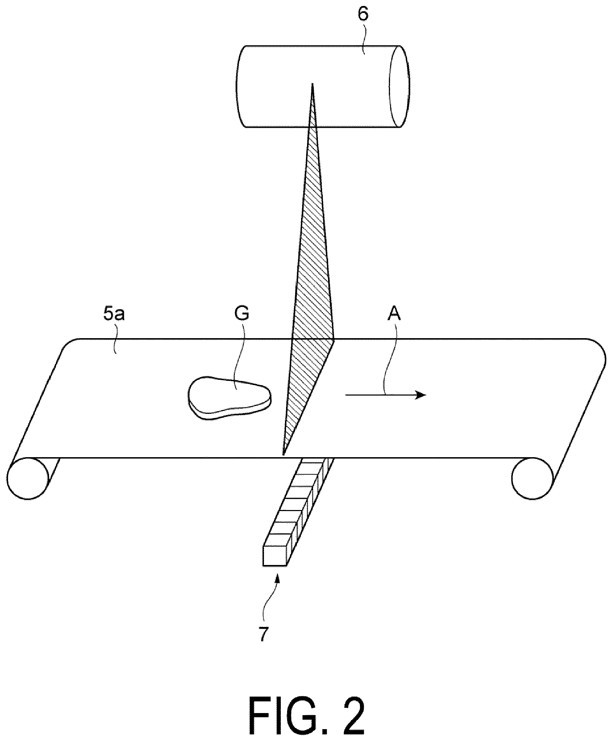

As illustrated in FIG. 1 and FIG. 2, the X-ray irradiation unit 6 is an X-ray source that irradiates the article G with X-rays, the article G being conveyed by the first conveyor 5a. The X-ray irradiation unit 6 is disposed in the shield box 4. The X-ray irradiation unit 6 includes, for example, an X-ray tube that emits X-rays and a diaphragm unit that widens each X-ray emitted from the X-ray tube into a fan-like shape in a plane perpendicular to the conveyance direction A. The X-rays emitted from the X-ray irradiation unit 6 may include X-rays of various energy bands from low energy (long wavelength) to high energy (short wavelength).

The X-ray detection unit 7 is a sensor member that detects the X-rays emitted by the X-ray irradiation unit 6 and transmitted through the article G. The X-ray detection unit 7 may be a line sensor or a sensor group disposed two dimensionally. The display operation unit 8 is provided in the device body 2. The display operation unit 8 displays various types of information and receives input operations under various conditions from an external source. The display operation unit 8 is, for example, a liquid crystal display and displays an operation screen as a touch panel. In this case, an operator can input various conditions via the display operation unit 8.

The sorting unit 20 sorts the articles G on the basis of a quality inspection result by an inspection unit 30D described below, and removes from the production line any articles G that are conveyed by the second conveyor 5b and are determined as being defective products. The sorting unit 20 allows any articles G that are determined as being good products to pass as they are. The sorting unit 20 is not particularly limited and various sorting devices can be used.

The control unit 30 is disposed in the device body 2, controls the operation of each component of the X-ray inspection device 10, and includes a processor such as a central processing unit (CPU), a memory such as a read only memory (ROM) and a random access memory (RAM), and storage such as a solid state drive (SSD). A program for controlling the X-ray inspection device 10 is stored on the ROM.

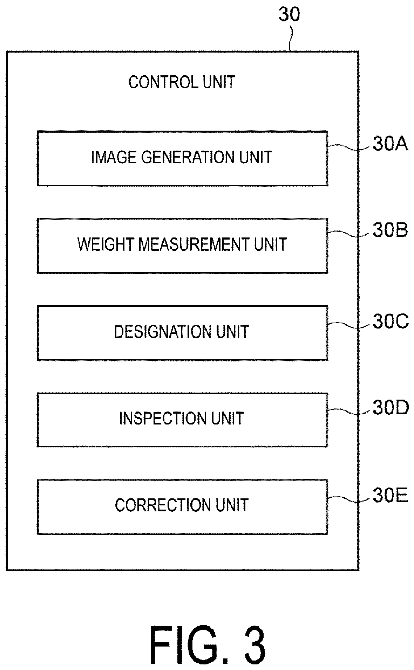

As illustrated in FIG. 3, the control unit 30 includes an image generation unit 30A, a weight measurement unit 30B, a designation unit 30C, the inspection unit 30D, and a correction unit 30E. In the control unit 30, the image generation unit 30A, the weight measurement unit 30B, the designation unit 30C, the inspection unit 30D, and the correction unit 30E are configured as software. However, these units may be configured as hardware.

The image generation unit 30A generates an X-ray image of the article G on the basis of a detection result of the X-ray detection unit 7. The weight measurement unit 30B acquires a weight (mass) of the article G from the X-ray image generated by the image generation unit 30A. On the basis of the X-ray image generated by the image generation unit 30A and the weight of the article G acquired by the weight measurement unit 30B, the designation unit 30C designates a plurality of cutting positions arranged in the conveyance direction (predetermined direction) A with respect to the article G. The plurality of cutting positions are positions at which the article G is to be cut by the cutting device 60. The plurality of cutting positions are positions where the article G is to be cut into strips, and are a plurality of planned cutting lines extending linearly in a width direction of the conveyor 5 in a plan view. The plurality of cutting positions are positions at which the article G is to be divided into a plurality of segments by the cutting device 60. The cutting positions designated by the designation unit 30C are transmitted to the cutting device 60.

The inspection unit 30D conducts a quality inspection of the article G on the basis of the generated X-ray image and determines whether the article G passes or fails. The quality inspection of the article G includes, for example, inspection of the presence or absence of foreign matter in the article G, the presence or absence of a missing part, and the presence or absence of a crack or a chip. Various known methods can be used for the quality inspection of the article G. The correction unit 30E corrects the cutting position on the basis of an actual weight of the segment obtained by actual measurement.

Returning to FIG. 1, the cutting device 60 includes a conveyor 61 that conveys the article G transferred from the second conveyor 5b and a cutting blade (not illustrated) that cuts the article G being conveyed by the conveyor 61. The conveyor 61 is, for example, a belt conveyor. The cutting blade cuts the article G at the plurality of cutting positions designated by the designation unit 30C of the X-ray inspection device 10 to produce a plurality of segments B. The segment B has a shape elongated in a width direction of the conveyor 61. The plurality of segments B are transported from the cutting system 1 by a delivery conveyor 52.

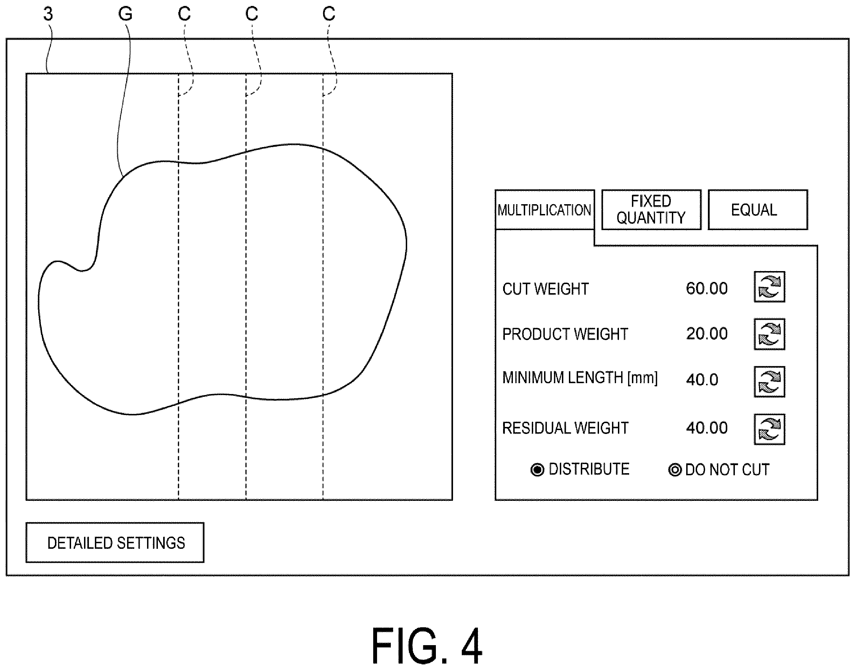

In the present embodiment, when the cutting positions are designated, a cutting position designation screen is displayed on the display operation unit 8. As illustrated in FIG. 4, the cutting position designation screen includes an X-ray image of the article G and a plurality of designated cutting positions C displayed overlaid on the X-ray image. On the cutting position designation screen, any one of a "Multiplication mode", a "Fixed Quantity mode", and an "Equal mode" can be selected as a cutting mode for cutting the article G. The Multiplication mode is a cutting mode in which cutting is performed such that the weight of the segment B is a multiple of the weight of one final product (hereinafter also referred to as "product weight"). The Fixed Quantity mode is a cutting mode in which cutting is performed such that the weight or width in the conveyance direction A (hereinafter, also referred to as a "cut width") of the segments B is a predetermined value. The Equal mode is a cutting mode in which cutting is performed such that the segments B obtained have weights or cut widths equal to each other.

In the Multiplication mode, the cutting position designation screen is configured to receive input of "Cut weight", "Product weight", "Minimum length", and "Residual weight". The cut weight is a primary target amount that is a target amount when the article G is divided into the segments B. The cut weight is a multiple of the product weight. The multiple is, for example, three times. The product weight is a secondary target amount that is a target amount when the segment B is further divided. The minimum length is a threshold value for determining the cut width, which is the width of the segment B in the conveyance direction A. In the illustrated example, 60 g is input as the cut weight, 20 g is input as the product weight, and 40 mm is input as the minimum length.

The residual weight is a lower limit threshold value used in a case in which a small segment remains when the article G is cut. Specifically, when the weight of the small segment of the article G is less than the "residual weight", the designation unit 30C selectively executes any one of a process of distributing the weight of the small segment between the plurality of segments B and a process of not performing cutting that would form the small segment. In the illustrated example, "Distribute" is selected. The inputted cut weight, product weight, minimum length, and residual weight are stored in the control unit 30. In the illustrated example, 40 g is input as the residual weight. Further, in the display operation unit 8, "Detailed settings" can be selected. By selecting detailed settings, the cutting positions C can be corrected.

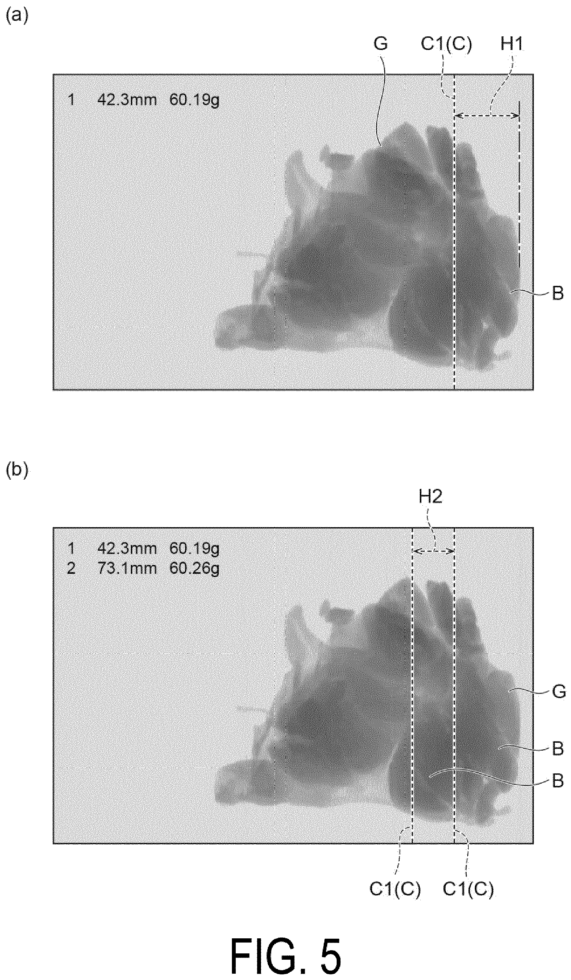

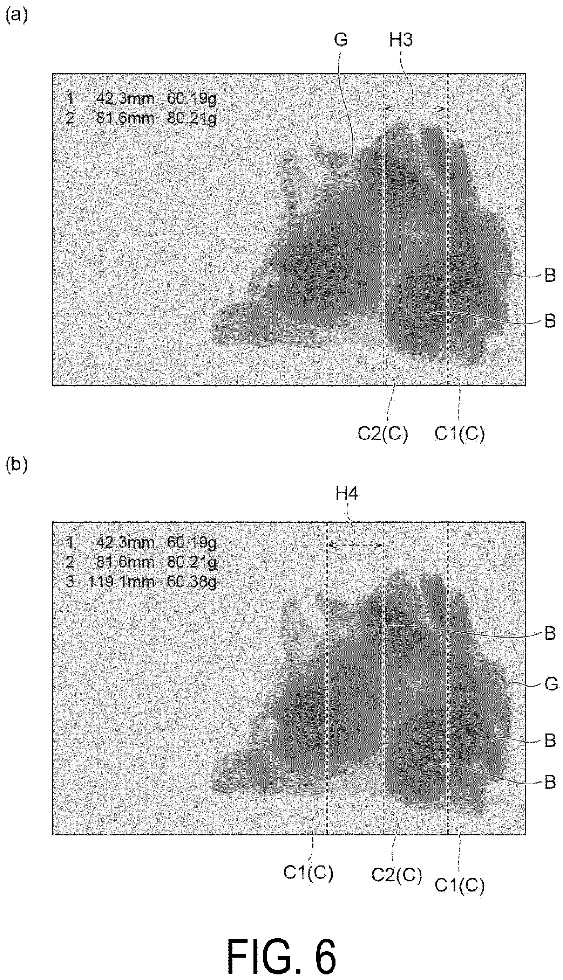

The designation unit 30C designates the cutting positions C when the article G is to be cut in any one of the Multiplication mode, the Fixed Quantity mode, and the Equal mode selected on the cutting position designation screen. In the Multiplication mode, the designation unit 30C designates a first cutting position C1 (refer to FIG. 5(a)) with respect to the article G so as to obtain the segment B having the set weight corresponding to the cut weight. When the cut width is less than a minimum length at the first cutting position C1, the designation unit 30C adds the product weight to the set weight and designates a second cutting position C2 (refer to FIG. 6(a)) so as to obtain the segment B having the set weight including the product weight. Note that, when the cut width is still less than the minimum length at the second cutting position C2, the designation unit 30C may further add the product weight to the set weight and designate a new second cutting position C2 so as to obtain the segment B having the set weight further including the product weight.

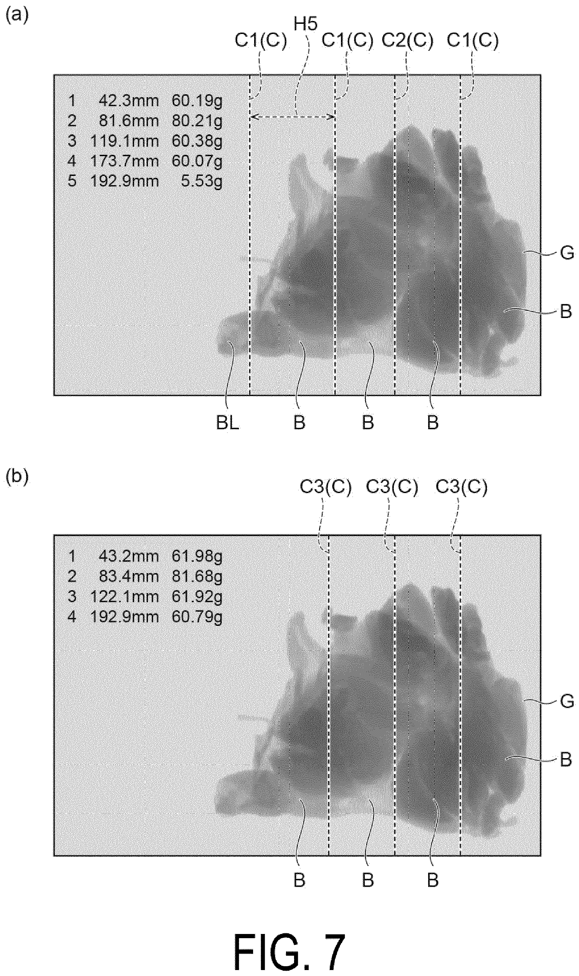

When "Distribute" is selected in the display operation unit 8 and a small segment having a low set weight (low set amount) less than the "residual weight" is to be produced in the article G as a result of designating the first or second cutting position C1 or C2, the designation unit 30C adds an amount obtained by dividing the low set weight by the plurality of segments B to the set weight of each of the plurality of segments B, and newly designates a third cutting position C3 (refer to FIG. 7(b)) at which the article G is divided into the plurality of segments B having a plurality of the set amounts after adding the obtained amount. The correction unit 30E corrects the first cutting position C1 or the second cutting position C2 on the basis of the set weight of the segment B and the measured weight of the segment B to reduce the difference between the set weight and the measured weight.

In the cutting system 1 as described above, the article G is transported into the X-ray inspection device 10, inspected for quality, and the plurality of cutting positions C are designated with respect to a non-defective article G in the Multiplication mode. The article G is cut at the plurality of cutting positions C by the cutting device 60 and transported out of the system as the plurality of segments B. Then, in the cutting system 1, the segment B is transported into the X-ray inspection device 10 with its orientation changed by 90° (with the longitudinal direction as the conveyance direction A), inspected for quality, and the plurality of cutting positions C are designated with respect to non-defective segments B in the Fixed Quantity mode or the Equal mode. The segments B are cut at the plurality of cutting positions C by the cutting device 60 and transported out of the system as a plurality of final products.

Next, an example of a cutting position designation method for designating the cutting position C with respect to the article G will be described in detail with reference to FIG. 5(a) to FIG. 7(b).

FIG. 5(a) to FIG. 7(b) are diagrams corresponding to the X-ray images and the cutting positions C included in the cutting position designation screen. In the following example, "Multiplication mode" and "Distribute" are selected on the cutting position designation screen. Note that, in FIG. 5(a) to FIG. 7(b), the estimated weight of each segment B (weight acquired by the weight measurement unit 30B) and the distance of each cutting position C from a downstream end of the article G are displayed on the display operation unit 8 for convenience. However, this display need not be provided.

First, the article G being conveyed is irradiated with X-rays from the X-ray irradiation unit 6 (irradiation step). The X-rays emitted from the X-ray irradiation unit 6 and transmitted through the article G are detected by the X-ray detection unit 7 (detection step). The image generation unit 30A generates an X-ray image of the article G on the basis of the detection result of the X-ray detection unit 7.

Subsequently, the plurality of cutting positions C are designated with respect to the article G on the basis of the generated X-ray image (designation step). That is, as illustrated in FIG. 5(a), the weight measurement unit 30B acquires a brightness of each pixel line having a linear shape in the width direction in the X-ray image from the downstream end of the article G in the conveyance direction A toward an upstream side, and stores this information. A substance having a greater weight appears darker on an X-ray image. Thus, a weight m of a minute portion corresponding to one pixel in the article G is approximated by a brightness I of the one pixel, as shown in Equation (1) below. Accordingly, the weight measurement unit 30B calculates the weight of each pixel line of the article G from the brightness of each pixel line, and integrates these weights from an end portion downstream in the conveyance direction A to the upstream side, thereby finding a weight of the article G corresponding to the conveyance amount. $m = - αln \left(I/I0\right)$ (1) α: constant, I0: brightness of pixel in region without substance present

When the integrated weight reaches the set weight corresponding to the cut weight, a position at a line corresponding to the one pixel line at that time is designated as the first cutting position C1 by the designation unit 30C. At this time, a determination is made as to whether a cut width H1 at the first cutting position C1 (here, the width between the first cutting position and the downstream end of the article G) is less than the minimum length. In the illustrated example, the cut width H1 is greater than the minimum length. Thus, the process directly proceeds to the next process.

As illustrated in FIG. 5(b), the weight measurement unit 30B integrates the weight of each pixel line of the article G from the first cutting position C1 previously designated to the upstream side in the conveyance direction A. When the integrated weight reaches the cut weight, the position at a line corresponding to the one pixel line at that time is designated as the first cutting position C1 by the designation unit 30C. At this time, a determination is made as to whether a cut width H2 at the first cutting position C1 (here, the width between the first cutting position C1 and the first cutting position C1 previously designated) is less than the minimum length.

In the illustrated example, the cut width H2 is less than the minimum length. Therefore, as illustrated in FIG. 6(a), the designation unit 30C adds the product weight to the set weight and designates the second cutting position C2 instead of the first cutting position C1 so as to include the segment B having the set weight including the product weight. At this time, a determination is made as to whether a cut width H3 at the second cutting position C2 (here, the width between the second cutting position C2 and the first cutting position C1 previously designated) is less than the minimum length. In the illustrated example, the cut width H3 is greater than the minimum length. Thus, the process directly proceeds to the next process.

As illustrated in FIG. 6(b), the weight measurement unit 30B integrates the weight of each pixel line of the article G from the second cutting position C2 previously designated to the upstream side in the conveyance direction A. When the integrated weight reaches the cut weight, the position at a line corresponding to the one pixel line at that time is designated as the first cutting position C1 by the designation unit 30C. At this time, a determination is made as to whether a cut width H4 at the first cutting position C1 (here, the width between the first cutting position C1 and the second cutting position C2 previously designated) is less than the minimum length. In the illustrated example, the cut width H4 is greater than the minimum length. Thus, the process directly proceeds to the next process.

As illustrated in FIG. 7(a), the weight measurement unit 30B integrates the weight of each pixel line of the article G from the first cutting position C1 previously designated to the upstream side in the conveyance direction A. When the integrated weight reaches the cut weight, the position at a line corresponding to the one pixel line at that time is designated as the first cutting position C1 by the designation unit 30C. At this time, a determination is made as to whether a cut width H5 at the first cutting position C1 (here, the width between the first cutting position C1 and the first cutting position C1 previously designated) is less than the minimum length. In the illustrated example, the cut width H5 is greater than the minimum length. Thus, the process directly proceeds to the next process.

The weight measurement unit 30B integrates the weight of each pixel line of the article G from the first cutting position C1 previously designated to the upstream side in the conveyance direction A. When one pixel line reaches an upstream end of the article G in the conveyance direction A, the integration of the weight is complete. In the illustrated example, as a result of designating the first and second cutting positions C1, C2, a small segment BL having a low set weight less than the residual weight is produced in the article G. Therefore, the designation unit 30C adds an amount obtained by dividing the low set weight by the plurality of segments B to the set weight of each of the plurality of segments B divided at the first and second cutting positions C1, C2. Then, as illustrated in FIG. 7(b), the designation unit 30C newly designates, in place of the first and second cutting positions C1, C2, the third cutting position C3 at which the article G is divided into the plurality of segments B having the plurality of set weights after the adding the obtained amount. In this way, designation of the plurality of cutting positions C for the article G is complete.

Note that, when the low set weight is divided across the plurality of segments B, the low set weight may be divided equally, may be divided by being weighted according to the sizes of the cut widths H1, H3, H4, H5, or may be divided by being weighted according to the weight of each segment B. Further, for example, when "Do not cut" is selected in the display operation unit 8, the designation unit 30C does not designate the first cutting position C1 for forming the segment B having the cut width H5, and the designation of the plurality of cutting positions C for the article G is completed as is. Further, the display operation unit 8 may display only the final display of FIG. 7(b) without displaying each of the displays of FIG. 5(a) to FIG. 7(a) on the display operation unit 8.

Next, an example of a case in which the cutting position C is corrected will be described in detail.

When the cutting position C is to be corrected, a correction mode for correcting the cutting position C is executed by selecting "Detailed settings" (refer to FIG. 4) in the display operation unit 8 and selecting correction of the cutting position C. In Correction mode, first, the article G being conveyed is irradiated with X-rays from the X-ray irradiation unit 6. The X-rays emitted from the X-ray irradiation unit 6 and transmitted through the article G are detected by the X-ray detection unit 7. An X-ray image of the article G is acquired by the image generation unit 30A. In the X-ray image, the weight measurement unit 30B acquires the weight of each pixel line of the article G and integrates these weights from the downstream end to the upstream side in the conveyance direction A. A position at a line corresponding to the one pixel line in the article G when the accumulated weight reaches the set weight is designated as the cutting position C by the designation unit 30C.

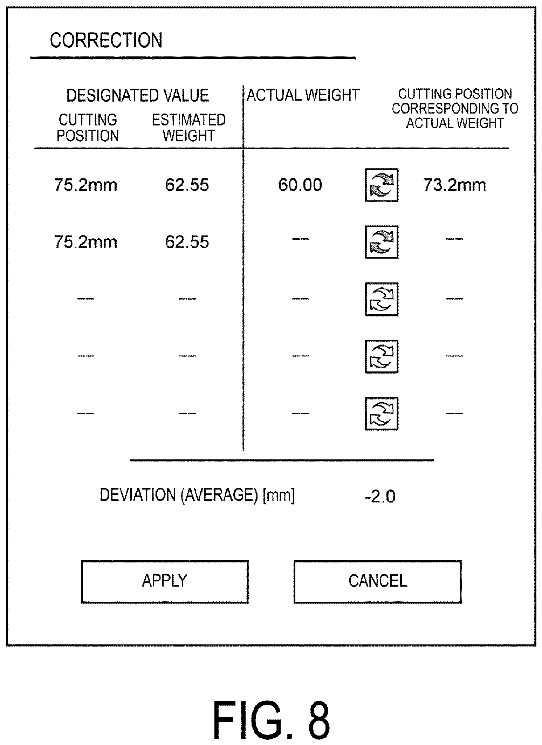

FIG. 8 is a diagram illustrating a cutting position correction screen displayed on the display operation unit 8 during correction of the cutting position C. As illustrated in FIG. 8, the correction unit 30E causes the display operation unit 8 to display, as estimated values, the designated cutting positions C and the estimated weights of the segments B obtained by cutting at the cutting positions C. The article G is cut at the designated cutting position C by the cutting device 60. For example, the user measures the actual weight (actual measurement amount) of the segment B obtained by the cutting by the cutting device 60 and inputs the actual weight via the display operation unit 8. The correction unit 30E acquires a position at a line corresponding to the one pixel line in the article G when the actual weight is reached as the cutting position C corresponding to the actual weight, and displays the position on the display operation unit 8. A value obtained by subtracting the cutting position C as the estimated position from the cutting position C corresponding to the actual weight is calculated as a deviation.

This deviation is calculated for each of the plurality of articles G that differ from each other. An average value of the deviation in the plurality of articles G is calculated. Then, the user performs an operation input of "Apply" on the display operation unit 8 to complete the correction. As a result, when designating the cutting positions C, the average value of the deviation is subtracted from the cutting positions C. On the other hand, when the user performs an operation input of "Cancel" on the display operation unit 8, the correction is canceled and the display returns to, for example, the display of FIG. 4.

As described above, in the present embodiment, when the cut width of the segment B is less than the minimum length, the second cutting position C2 is designated so as to obtain the segment B having the set weight including the product weight. Accordingly, even in a case in which the article G does not have a uniform thickness, for example, it is possible to designate the second cutting position C2 that helps prevent the segment B from becoming long and narrow while considering further division (a secondary cut) of the segment B to obtain the product. That is, it is possible to obtain a product having a favorable shape. As a result, at the secondary cut, cutting can be performed in the Fixed Quantity mode or the Equal mode, and thus the yield can be increased. When the product obtained by the secondary cut is heated and cooked, variation in the necessary heating time can be minimized, which can also support cooking automation.

In the present embodiment, the X-ray irradiation unit 6 irradiates the article G with X-rays. The control unit 30 includes the weight measurement unit 30B that acquires the weight of the article G from the X-ray image. In the designation unit 30C, the primary target amount is set as the cut weight, the secondary target amount is set as the product weight, and the set amount is set as the set weight. That is, the designation unit 30C uses weight as the primary target amount, the secondary target amount, and the set amount. In this case, the cutting position C can be designated by using weight.

In the present embodiment, when the small segment BL having a low set weight less than the residual weight is produced in the article G as a result of designating the first or second cutting position C1, C2, the designation unit 30C adds an amount obtained by dividing the low set weight by the plurality of segments B to the set weights of each of the plurality of segments B. The designation unit 30C newly designates the third cutting position C3 at which the article G is divided into the plurality of segments B having the plurality of set weights after adding the amount. This helps prevent a wasted portion (leftover end) from being produced when dividing the article G into the plurality of segments B.

In the present embodiment, the correction unit 30E is included that corrects the cutting position C on the basis of the estimated weight of the segment B obtained by cutting the article G at the cutting position C and the actual weight of the segment B. Accordingly, even if there is variation in, for example, conveyance speed of the articles G and/or in an installation position of the cutting device 60 that cuts the article G, the cutting position C can be corrected by the correction unit 30E in accordance with the variation.

In the cutting position designation method according to the present embodiment, the article G being conveyed is irradiated with X-rays, the X-rays transmitted through the article G are detected, and the plurality of cutting positions C are designated with respect to the article G on the basis of the detection result. In the designation of the cutting positions C, the first cutting position C1 is designated such that the segment B having the set weight corresponding to the cut weight is obtained and the product weight is added to the set weight in a case in which the cut width of the segment B at the first cutting position C1 is less than the minimum length, and the second cutting position C2 is designated so as to obtain the segment B having the set weight including the product weight. In the cutting position designation method according to the present embodiment, the effects described above such as obtaining a product having a favorable shape can be also achieved.

In the present embodiment, at the start of operation, for example, a deviation between the weight of the article G acquired by the weight measurement unit 30B and the actual weight of the article G obtained by actual measurement by a user or the like may be checked. In a case in which the deviation is a certain value or greater, the weight measurement unit 30B may correct the weight of the article G to be acquired by, for example, adjusting the constant α in Equation (1) described above.

Although embodiments have been described above, this one aspect of the present invention is not limited to the embodiments described above, and various changes can be made without departing from the gist of the invention. scope of the invention as defined by the claims.

In the embodiments described above, X-rays are employed as the electromagnetic waves, but the type of electromagnetic wave is not particularly limited. In the embodiments described above, the electromagnetic wave transmitted through the article G is detected by the detection unit, but electromagnetic waves reflected by the article G may be detected by the detection unit. In the embodiments described above, the primary target amount is not limited to the cut weight and may be another weight. In the embodiments described above, the secondary target amount is not limited to the product weight and may be another weight less than the primary target amount. In the embodiments described above, the threshold value is not limited to the minimum length and may be another value. For example, the threshold value may be a length corresponding to a length of the segment B in the longitudinal direction.

### Reference Signs List

1 Cutting system, 5 Conveyor, 6 X-ray irradiation unit (irradiation unit, cutting position designation device), 7 X-ray detection unit (detection unit, cutting position designation device), 10 X-ray inspection device, 20 Sorting unit, 30B Weight measurement unit (cutting position designation device), 30C Designation unit (cutting position designation device), 30D Inspection unit, 30E Correction unit (cutting position designation device), 60 Cutting device, A Conveyance direction (predetermined direction), B Segment, BL Small segment, C Cutting position, C1 First cutting position, C2 Second cutting position, C3 Third cutting position, G Article

## Claims

1. A cutting position designation device comprising:
an irradiation unit (6) configured to irradiate an article (G) with electromagnetic waves, the article (G) being conveyed by a conveyor (5);
a detection unit (7) configured to detect the electromagnetic waves emitted by the irradiation unit (6) and transmitted through or reflected by the article (G); and
a designation unit (30C) configured to designate a plurality of cutting positions (C) arranged in a predetermined direction with respect to the article (G) on the basis of a detection result by the detection unit (7),
wherein the designation unit (30C) is further configured to:
designate a first cutting position (C1) so as to obtain a segment (B) having a set amount corresponding to a primary target amount, the primary target amount being a target amount when the article (G) is divided into a plurality of segments (B);
**characterized in that** in a case in which a width of the segment (B) in the predetermined direction is less than a threshold value at the first cutting position (C1), the designation unit (30C) is further configured to add a secondary target amount to the set amount, the secondary target amount being a target amount when the plurality of segments (B) are to be further divided, and designate a second cutting position (C2) so as to obtain the segment (B) having the set amount including the secondary target amount.

2. The cutting position designation device according to claim 1, further comprising:
a weight measurement unit (30B) configured to acquire a weight of the article (G) from an X-ray image based on the detection result by the detection unit (7),
wherein
the irradiation unit (6) is configured to irradiate the article (G) with X-rays, and
the designation unit (30C) is configured to use weight as the primary target amount, the secondary target amount, and the set amount.

3. The cutting position designation device according to any one of claims 1 to 2,
wherein in a case in which a small segment (BL) having a low set amount less than a lower limit threshold value is produced in the article (G) as a result of designating the first cutting position (C1) or the second cutting position (C2), the designation unit (30C) is configured to add an amount obtained by dividing the low set amount by the plurality of segments (B) to the set amount of each of the plurality of segments (B), and newly designate a third cutting position (C3) at which the article (G) is divided into the plurality of segments (B) having a plurality of set amounts after adding the amount.

4. The cutting position designation device according to any one of claims 1 to 3, further comprising:
a correction unit (30E) configured to correct the plurality of cutting positions (C) on the basis of an estimated amount of the segment (B) and an actual measurement amount of the segment (B).

5. A cutting position designation method comprising:
an irradiation step of irradiating an article (G) with electromagnetic waves, the article (G) being conveyed;
a detection step of detecting the electromagnetic waves emitted in the irradiation step and transmitted through or reflected by the article (G); and
a designation step of designating a plurality of cutting positions (C) arranged in a predetermined direction with respect to the article (G) on the basis of a detection result in the detection step,
wherein the designation step includes:
designating a first cutting position (C1) so as to obtain a segment (B) having a set amount corresponding to a primary target amount, the primary target amount being a target amount when the article (G) is divided into a plurality of segments (B), **characterized by**
in a case in which a width of the segment (B) in the predetermined direction is less than a threshold value at the first cutting position (C1), adding a secondary target amount to the set amount, the secondary target amount being a target amount when the plurality of segments (B) are to be further divided, and designating a second cutting position (C2) so as to obtain the segment (B) having the set amount including the secondary target amount.

6. A cutting system (1) comprising:
the cutting position designation device according to any one of claims 1 to 4; and
a cutting device (60) configured to cut the article (G) at the plurality of cutting positions (C) designated by the cutting position designation device.

7. An X-ray inspection device (10) comprising:
the cutting position designation device according to claim 2;
an inspection unit (30D) configured to conduct a quality inspection of the article (G) on the basis of the X-ray image; and
a sorting unit (20) configured to remove the article (G) in a case where the article (G) is determined as being a defective product on the basis of a quality inspection result by the inspection unit (30D).

## Patentansprüche

1. Vorrichtung zur Bestimmung der Schneidposition, die aufweist:
eine Bestrahlungseinheit (6), die konfiguriert ist, einen Artikel (G) mit elektromagnetischen Wellen zu bestrahlen, wobei der Artikel (G) von einem Förderer (5) befördert wird;
eine Detektionseinheit (7), die konfiguriert ist, die elektromagnetischen Wellen zu detektieren, die von der Bestrahlungseinheit (6) emittiert und durch den Artikel (G) durchgelassen oder von diesem reflektiert werden; und
eine Bestimmungseinheit (30C), die konfiguriert ist, mehrere Schneidpositionen (C), die in einer vorbestimmten Richtung in Bezug auf den Artikel (G) angeordnet sind, auf der Grundlage eines Detektionsergebnisses der Detektionseinheit (7) zu bestimmen
wobei die Bestimmungseinheit (30C) ferner konfiguriert ist, um:
eine erste Schneidposition (C1) zu bestimmen, um ein Segment (B) mit einer festgelegten Menge zu erhalten, die einer primären Zielmenge entspricht, wobei die primäre Zielmenge eine Zielmenge ist, wenn der
Artikel (G) in mehrere Segmente (B) unterteilt wird;
**dadurch gekennzeichnet, dass**
in einem Fall, in dem eine Breite des Segments (B) in der vorbestimmten Richtung an der ersten Schneidposition (C1) kleiner als ein Schwellenwert ist, die Bestimmungseinheit (30C) ferner konfiguriert ist, eine sekundäre Zielmenge zur festgelegten Menge zu addieren, wobei die sekundäre Zielmenge eine Zielmenge ist, wenn die mehreren Segmente (B) weiter unterteilt werden sollen, und eine zweite Schneidposition (C2) zu bestimmen, um das Segment (B) mit der festgelegten Menge einschließlich der sekundären Zielmenge zu erhalten.

2. Vorrichtung zur Bestimmung von Schneidpositionen nach Anspruch 1, die ferner aufweist:
eine Gewichtsmesseinheit (30B), die konfiguriert ist, ein Gewicht des Artikels (G) aus einem Röntgenbild basierend auf dem Detektionsergebnis der Detektionseinheit (7) zu erfassen,
wobei
die Bestrahlungseinheit (6) konfiguriert ist, den Artikel (G) mit Röntgenstrahlen zu bestrahlen, und die Bestimmungseinheit (30C) konfiguriert ist, das Gewicht als primäre Zielmenge, sekundäre Zielmenge und festgelegte Menge zu verwenden.

3. Vorrichtung zur Bestimmung der Schneidposition nach einem der Ansprüche 1 bis 2,
wobei in einem Fall, in dem ein kleines Segment (BL) mit einer niedrigen festgelegten Menge, die kleiner als ein unterer Schwellenwert ist, im Artikel (G) infolge der Bestimmung der ersten Schneidposition (C1) oder der zweiten Schneidposition (C2) erzeugt wird, die Bestimmungseinheit (30C) konfiguriert ist, eine Menge, die durch Dividieren der niedrigen festgelegten Menge durch die mehreren Segmente (B) erhalten wird, zur festgelegten Menge von jedem der mehreren Segmente (B) zu addieren und eine dritte Schneidposition (C3) neu zu bestimmen, an der der Artikel (G) in die mehreren Segmente (B) mit mehreren festgelegten Mengen nach Addieren der Menge unterteilt wird.

4. Vorrichtung zur Bestimmung der Schneidposition nach einem der Ansprüche 1 bis 3, die ferner aufweist:
eine Korrektureinheit (30E), die konfiguriert ist, die mehreren Schneidpositionen (C) auf der Grundlage einer geschätzten Menge des Segments (B) und einer tatsächlich Messmenge des Segments (B) zu korrigieren.

5. Verfahren zur Bestimmung der Schneidposition, das aufweist:
einen Bestrahlungsschritt zum Bestrahlen eines Artikels (G) mit elektromagnetischen Wellen, wobei der Artikel (G) befördert wird;
einen Detektionsschritt zum Detektieren der elektromagnetischen Wellen, die im Bestrahlungsschritt emittiert und durch den Artikel (G) durchgelassen oder von diesem reflektiert werden; und
einen Bestimmungsschritt zum Bestimmen mehrerer Schneidpositionen (C), die in einer vorbestimmten Richtung in Bezug auf den Artikel (G) angeordnet sind, auf der Grundlage eines Detektionsergebnisses im Detektionsschritt,
wobei der Bestimmungsschritt aufweist:
Bestimmen einer ersten Schneidposition (C1), um ein Segment (B) mit einer festgelegten Menge zu erhalten, die einer primären Zielmenge entspricht, wobei die primäre Zielmenge eine Zielmenge ist, wenn der Artikel (G) in mehrere Segmente (B) unterteilt wird,
**gekennzeichnet durch**
in einem Fall, in dem eine Breite des Segments (B) in der vorbestimmten Richtung an der ersten Schneidposition (C1) kleiner als ein Schwellenwert ist, Addieren einer sekundären Zielmenge zu der festgelegten Menge, wobei die sekundäre Zielmenge eine Zielmenge ist, wenn die mehreren Segmente (B) weiter unterteilt werden sollen, und Bestimmen einer zweiten Schneidposition (C2), um das Segment (B) mit der festgelegten Menge einschließlich der sekundären Zielmenge zu erhalten.

6. Schneidsystem (1), das aufweist:
die Vorrichtung zur Bestimmung der Schneidposition nach einem der Ansprüche 1 bis 4; und
eine Schneidevorrichtung (60), die konfiguriert ist, den Artikel (G) an den mehreren Schneidepositionen (C) zu schneiden, die, von der Vorrichtung zur Bestimmung der Schneidposition bestimmt werden.

7. Röntgeninspektionsvorrichtung (10), die aufweist:
die Vorrichtung zur Bestimmung der Schneidposition nach Anspruch 2;
eine Inspektionseinheit (30D), die konfiguriert ist, eine Qualitätsinspektion des Artikels (G) auf der Grundlage des Röntgenbildes durchzuführen; und
eine Sortiereinheit (20), die konfiguriert ist, den Artikel (G) in einem Fall zu entfernen, in dem auf der Grundlage eines Qualitätsinspektionsergebnisses der Inspektionseinheit (30D) bestimmt wird, dass der Artikel (G) ein fehlerhaftes Produkt ist.

## Revendications

1. Dispositif de désignation de la position de coupe comprenant :
une unité d'irradiation (6) configurée pour irradier un article (G) avec des ondes électromagnétiques, l'article (G) étant transporté par un convoyeur (5) ;
une unité de détection (7) configurée pour détecter les ondes électromagnétiques émises par l'unité d'irradiation (6) et transmises à travers l'article (G) ou réfléchies par celui-ci ; et
une unité de désignation (30C) configurée pour désigner une pluralité de positions de coupe (C) disposées dans une direction prédéterminée par rapport à l'article (G) sur la base d'un résultat de détection obtenu par l'unité de détection (7),
dans lequel l'unité de désignation (30C) est en outre configurée pour :
désigner une première position de coupe (C1) de manière à obtenir un segment (B) ayant une quantité définie correspondant à une quantité cible principale, la quantité cible principale étant une quantité cible lorsque l'article (G) est divisé en une pluralité de segments (B) ;
**caractérisé en ce que**
dans le cas où la largeur du segment (B) dans la direction prédéterminée est inférieure à une valeur seuil au niveau de la première position de coupe (C1), l'unité de désignation (30C) est en outre configurée pour ajouter une quantité cible secondaire à la quantité définie, la quantité cible secondaire étant une quantité cible lorsque la pluralité de segments (B) doit être divisée davantage, et pour désigner une deuxième position de coupe (C2) de manière à obtenir le segment (B) ayant la quantité définie incluant la quantité cible secondaire.

2. Dispositif de désignation de la position de coupe selon la revendication 1, comprenant en outre :
une unité de mesure de poids (30B) configurée pour déterminer le poids de l'article (G) à partir d'une image radiographique sur la base du résultat de détection fourni par l'unité de détection (7),
dans lequel
l'unité d'irradiation (6) est configurée pour irradier l'article (G) avec des rayons X, et l'unité de désignation (30C) est configurée pour utiliser le poids comme quantité cible principale, comme quantité cible secondaire et comme quantité définie.

3. Dispositif de désignation de la position de coupe selon l'une quelconque des revendications 1 à 2,
dans lequel, dans le cas où un petit segment (BL) présentant une quantité définie faible, inférieure à une valeur seuil inférieure, est généré dans l'article (G) à la suite de la désignation de la première position de coupe (C1) ou de la deuxième position de coupe (C2), l'unité de désignation (30C) est configurée pour ajouter une quantité obtenue en divisant la faible quantité définie par la pluralité de segments (B) à la quantité définie de chaque segment de la pluralité de segments (B), et pour désigner à nouveau une troisième position de coupe (C3) à laquelle l'article (G) est divisé en une pluralité de segments (B) présentant une pluralité de quantités définies après ajout de la quantité.

4. Dispositif de désignation de la position de coupe selon l'une quelconque des revendications 1 à 3, comprenant en outre :
une unité de correction (30E) configurée pour corriger la pluralité de positions de coupe (C) sur la base d'une quantité estimée du segment (B) et d'une quantité de mesure réelle du segment (B).

5. Procédé de désignation de la position de coupe comprenant :
une étape d'irradiation consistant à irradier un article (G) avec des ondes électromagnétiques, l'article (G) étant transporté ;
une étape de détection consistant à détecter les ondes électromagnétiques émises lors de l'étape d'irradiation et transmises à travers l'article (G) ou réfléchies par celui-ci ; et
une étape de désignation consistant à désigner une pluralité de positions de coupe (C) disposées dans une direction prédéterminée par rapport à l'article (G) sur la base d'un résultat de détection obtenu lors de l'étape de détection,
dans lequel l'étape de désignation comprend :
la désignation d'une première position de coupe (C1) de manière à obtenir un segment (B) ayant une quantité définie correspondant à une quantité cible principale, la quantité cible principale étant une quantité cible lorsque l'article (G) est divisé en une pluralité de segments (B),
**caractérisé par**
**le fait que**, dans le cas où la largeur du segment (B) dans la direction prédéterminée est inférieure à une valeur seuil au niveau de la première position de coupe (C1), l'ajout d'une quantité cible secondaire à la quantité définie, la quantité cible secondaire étant une quantité cible lorsque la pluralité de segments (B) doit être divisée davantage, et la désignation d'une deuxième position de coupe (C2) de manière à obtenir le segment (B) ayant la quantité définie incluant la quantité cible secondaire.

6. Système de coupe (1) comprenant :
le dispositif de désignation de la position de coupe selon l'une quelconque des revendications 1 à 4 ; et
un dispositif de coupe (60) configuré pour couper l'article (G) au niveau de la pluralité de positions de coupe (C) désignées par le dispositif de désignation de la position de coupe.

7. Dispositif d'inspection par rayons X (10) comprenant :
le dispositif de désignation de la position de coupe selon la revendication 2 ;
une unité d'inspection (30D) configurée pour effectuer un contrôle qualité de l'article (G) sur la base de l'image radiographique ; et
une unité de tri (20) configurée pour retirer l'article (G) dans le cas où l'article (G) est identifié comme étant un produit défectueux sur la base d'un résultat de contrôle qualité obtenu par l'unité d'inspection (30D).
